# EUROPEAN PATENT APPLICATION

(11) **EP 4 349 450 A1**
(43) Date of publication of application: **10.04.2024**
(21) Application number: 22811047.4
(22) Date of filing: 07.04.2022
(51) Int. Cl.: B01D 53/04, B01J 20/26, B01J 20/28, B01J 20/34

(54) **ADSORPTION DEVICE**

(30) Priority: 24.05.2021 JP 2021086645
(71) Applicant: Panasonic Intellectual Property Management Co., Ltd., Kadoma-shi, Osaka 571-0057 (JP)
(72) Inventor: NOBUNAGA, Masaki, Osaka 571-0057 (JP); KOMURA, Akiko, Osaka 571-0057 (JP); AKEYAMA, Yukako, Osaka 571-0057 (JP)
(74) Representative: Eisenführ Speiser
(86) International application number: PCT/JP2022/017297
(87) International publication number: WO 2022/249773

(57) **Abstract**

Adsorption device (4) includes adsorption material (5) that repeatedly adsorbs and releases a predetermined component of a gas, and holder (8) that holds adsorption material (5) in contact with the gas. Holder (8) includes holder body (80) and covering material (81). Holder body (80) is provided with a plurality of cells (80a) each having inner space (80b) that accommodates adsorption material (5), inlet port (80c) through which a gas is introduced into inner space (80b), and discharge port (80d) through which the gas that has passed through inner space (80b) is discharged. Covering material (81) has air permeability and covers inlet port (80c) and discharge port (80d) of cell (80a).

## Description

### TECHNICAL FIELD

The present disclosure relates to an adsorption device that is used in an application device such as an air conditioning device to adsorb a predetermined component of a gas.

### BACKGROUND ART

PTL 1 discloses a filter that is used in an in-vehicle air conditioner device as an adsorption device that adsorbs a predetermined component of a gas. The filter includes a plurality of activated carbon cells formed in a honeycomb die and a cartridge that holds the plurality of activated carbon cells side by side in a flat plate shape, and adsorbs and removes a predetermined component contained in air inside the vehicle.

### Citation List

### Patent Literature

PTL 1: Unexamined Japanese Patent Publication No. 2000-326724

### SUMMARY OF THE INVENTION

The adsorption device is disposed and used inside an application device such as an air conditioner device, for example. The adsorption device is replaced, for example, every predetermined period in order to maintain good adsorption performance. In this case, a workload and cost associated with replacement of the adsorption device are generated.

Therefore, the present disclosure provides an adsorption device capable of obtaining good adsorption performance of a predetermined component contained in a gas and reducing the workload and cost associated with the replacement.

An adsorption device according to one aspect of the present disclosure includes an adsorption material that repeatedly adsorbs and releases a predetermined component of a gas, and a holder that holds the adsorption material in contact with the gas. The holder includes a holder body that includes a plurality of cells, each of the plurality of cells including an inner space that accommodates the adsorption material, an inlet port through which the gas is introduced into the inner space, and a discharge port through which the gas that has passed through the inner space is discharged; and a covering material that has air permeability and covers the inlet port and the discharge port of the each of the plurality of cells.

The adsorption device according to one aspect of the present disclosure can obtain good adsorption performance of a predetermined component contained in the gas, and can reduce the workload and cost associated with the replacement.

### BRIEF DESCRIPTION OF THE DRAWINGS

Fig. 1 is a perspective view illustrating a configuration of an indoor unit of an air conditioning device according to an exemplary embodiment.
Fig. 2 is a schematic view illustrating a configuration of an adsorption device of Fig. 1.
Fig. 3 is a view illustrating a structure of a polymer compound contained in an adsorption material of Fig. 1.
Fig. 4 is a schematic view illustrating a configuration of an adsorption device according to a first modification.

### DESCRIPTION OF EMBODIMENT

An adsorption device according to one aspect of the present disclosure includes an adsorption material that repeatedly adsorbs and releases a predetermined component of a gas, and a holder that holds the adsorption material in contact with the gas. The holder includes a holder body that includes a plurality of cells, each of the plurality of cells including an inner space that accommodates the adsorption material, an inlet port through which the gas is introduced into the inner space, and a discharge port through which the gas that has passed through the inner space is discharged; and a covering material that has air permeability and covers the inlet port and the discharge port of the each of plurality of cells.

According to the above configuration, by dividing and accommodating the adsorption material that repeatedly adsorbs and releases a predetermined component of the gas in the inner spaces of the plurality of cells, the adsorption material can be distributed and dispersed in each cell. As a result, a contact area of the adsorption material to the gas can be enlarged, and an adsorption amount of the adsorption material can be increased. Therefore, the adsorption device can obtain good adsorption performance. Further, the adsorption material repeatedly adsorbs and releases a predetermined component of the gas. For this reason, the adsorption device can be continuously used by regenerating the adsorption material. Therefore, the adsorption device can reduce a number of times of replacement, the workload and cost associated with the replacement.

A flow channel cross-sectional area of each of the inner spaces in a flowing direction of the gas from the inlet ports to the discharge ports may be a value in a range from 0.5 cm² to 10.0 cm² inclusive.

As a result, the adsorption material held in each cell can be efficiently brought into contact with the gas. Therefore, the adsorption amount of the adsorption material can be improved. Further, for example, in a case where the adsorption material is regenerated by heating, the adsorption material held in the cells can be efficiently brought into contact with the heated gas. Therefore, the adsorption material can be efficiently regenerated.

A material of the holder body may include at least one of paper and resin.

As a result, a weight of the adsorption device can be reduced, and manufacturing cost can be reduced. Further, the holder body can be easily processed into a desired shape. Further, since the material of the holder body includes at least one of paper or resin, the holder body can be made of a material having a low thermal conductivity. As a result, in a case where the adsorption material is heated, the adsorption material can be kept warm by the holder body. Therefore, for example, in a case where the adsorption material releases a predetermined component by heating, keeping the adsorption material warm makes it easy to release an adsorption object to the adsorption material, and the adsorption material can be efficiently regenerated.

Alternatively, a material of the holder body may include at least one of metal and ceramic.

When the material of the holder body includes at least one of metal and ceramic, the holder body can be made of a material having a high thermal conductivity. As a result, in a case where the adsorption material is heated, the adsorption material can be heated through the holder body. Therefore, for example, in a case where the adsorption material releases a predetermined component by heating, the adsorption material is favorably heated to easily release the adsorption object to the adsorption material, and the adsorption material can be efficiently regenerated.

In this case, the thermal conductivity of the holder body may be a value in a range from 50 W/mK to 500 W/mK inclusive.

The adsorption material may contain a polymer compound having a functional group that adsorbs and releases a predetermined component and a resin skeleton directly or indirectly bonded to the functional group.

As a result, it is possible to prevent the adsorption material from volatilizing and disappearing. Therefore, it is possible to satisfactorily maintain the adsorption performance of the adsorption material and meanwhile regenerate the adsorption material.

A pressure loss when air is caused to pass through the covering material at a flow velocity of 1 m/sec may be a value in a range from 5 Pa to 30 Pa inclusive.

As a result, in the adsorption device, the adsorption material held in each cell can be prevented from falling off from the holder body by the covering material, a good air permeability can be secured, and the adsorption material can be efficiently brought into contact with the gas.

The covering material may include a nonwoven fabric.

The nonwoven fabric may contain at least one of polypropylene (PP), polyethylene (PE), and polyethylene terephthalate (PET).

As a result, a degree of freedom in designing the covering material can be improved. Further, in a case where the nonwoven fabric contains at least one of PP, PE, and PET as described above, the nonwoven fabric and the holder body can be relatively easily joined to each other by thermal welding or the like without using an adhesive material. As a result, a structure of the adsorption device can be simplified, and the weight of the adsorption device can be reduced.

A basis weight of the covering material may be a value in a range from 10 g/m² to 90 g/m² inclusive.

As a result, it is possible to efficiently bring the adsorption material into contact with the gas and meanwhile prevent the adsorption material held in each cell from falling off from the holder body by the covering material.

The covering material may include a metal mesh.

As a result, durability of the covering material can be improved. Further, thermal conductivity of the covering material can be improved. Therefore, for example, in a case where the adsorption material is regenerated by heating, the adsorption material can be easily regenerated by heating the adsorption material from outside of the adsorption device through the covering material.

The pressure loss when the air is caused to pass from a side of the inlet ports to a side of the discharge ports at a flow velocity of 1 m/sec may be a value in a range from 40 Pa to 500 Pa inclusive.

As a result, the air permeability of each cell can be further improved.

The adsorption material may be a powder having an average particle diameter in a range from 400 µm to 1.3 mm inclusive.

In this case, the covering material may include a mesh having a mesh diameter in a range from 50 (mesh/inch) to 200 (mesh/inch) inclusive.

As a result, it is possible to prevent the adsorption material from falling off through a gap of the covering material and meanwhile secure a good specific surface area of the adsorption material.

Hereinafter, exemplary embodiments will be described with reference to the drawings.

### (Exemplary embodiments)

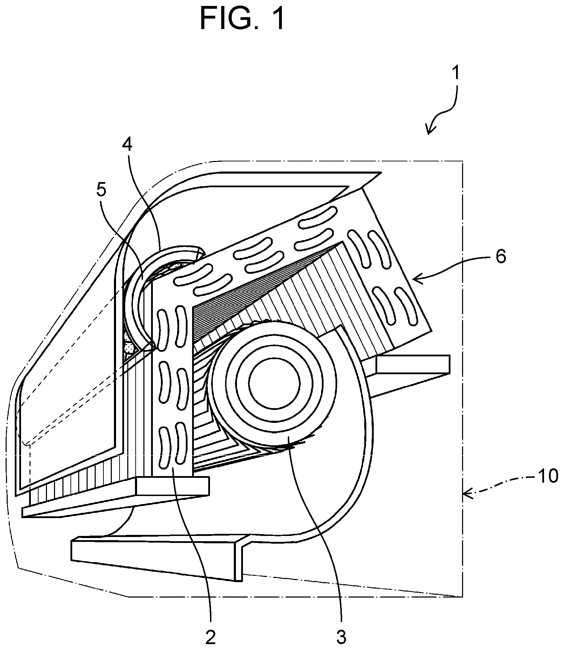

Fig. 1 is a perspective view illustrating a configuration of indoor unit 10 of air conditioning device 1 according to an exemplary embodiment. Air conditioning device 1 is an example of an application device including adsorption device 4. As an example, air conditioning device 1 shown in Fig. 1 includes indoor unit 10 and an outdoor unit (not illustrated). In air conditioning device 1, a refrigerant circulates between indoor unit 10 and the outdoor unit. Indoor unit 10 includes heat exchanger 2 that exchanges heat between the refrigerant and indoor air, and air blowing mechanism 3 that takes in the indoor air, exchanges the heat with heat exchanger 2, and then discharges the air.

Further, indoor unit 10 includes adsorption device 4 including adsorption material 5 that repeatedly adsorbs and releases a predetermined component of a gas, and regeneration mechanism 6 that causes adsorption material 5 in adsorption device 4 to release the predetermined component to regenerate adsorption material 5. The predetermined component mentioned here is, as an example, carbon dioxide. As will be described later, indoor unit 10 adsorbs and removes carbon dioxide from the indoor air by adsorption material 5. Further, indoor unit 10 regenerates adsorption material 5 by releasing carbon dioxide adsorbed on adsorption material 5 by regeneration mechanism 6. As a result, air conditioning device 1 regenerates adsorption material 5 during using it repeatedly. As described above, adsorption device 4 of the present exemplary embodiment is a filter that removes carbon dioxide in the air.

Regeneration mechanism 6 of the present exemplary embodiment releases carbon dioxide adsorbed on adsorption material 5 by heating adsorption material 5. In air conditioning device 1, as an example, heat exchanger 2 and air blowing mechanism 3 also serve as regeneration mechanism 6. Therefore, air conditioning device 1 does not need to include a separate regeneration mechanism for regenerating adsorption material 5. Heat exchanger 2 exchanges heat with the refrigerant to heat the air. Air blowing mechanism 3 blows the heated air to adsorption device 4.

As an example, adsorption device 4 is disposed in a middle of an air flow passage provided in indoor unit 10. Air blowing mechanism 3 generates an air flow passing through adsorption device 4 by the air flowing through the air flow passage. Adsorption device 4 carries adsorption material 5.

Adsorption material 5 of the present exemplary embodiment repeatedly adsorbs and releases carbon dioxide contained in the gas. Adsorption material 5 is formed in a porous shape. Adsorption material 5 releases adsorbed carbon dioxide by being heated at a relatively low temperature (as an example, a temperature in a range from 40°C to 100°C inclusive). As described above, since adsorption material 5 can be regenerated at a relatively low temperature, energy required for regeneration can be reduced. Further, it is possible to suppress unnecessary thermal influence on components of indoor unit 10 due to a heating temperature at which adsorption material 5 is heated.

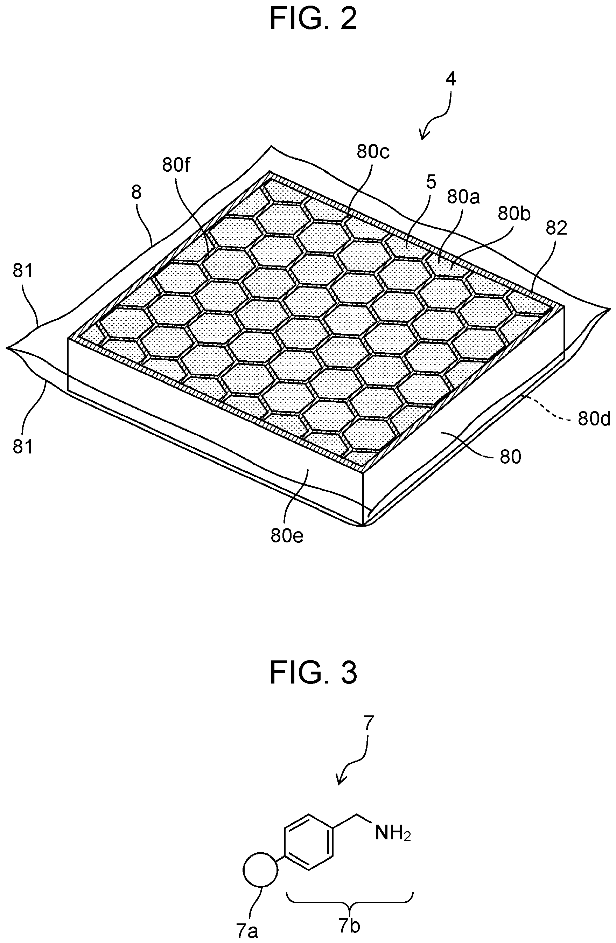

Fig. 2 is a schematic view illustrating a configuration of adsorption device 4 of Fig. 1. In Fig. 2, the inside of adsorption device 4 covered with covering material 81 is indicated by a solid line. Adsorption device 4 shown in Figs. 1 and 2 includes adsorption material 5 that repeatedly adsorbs and releases a predetermined component of a gas, and holder 8 that holds adsorption material 5 in contact with the gas. Adsorption material 5 is, as an example, a powder. Holder 8 includes holder body 80, covering material 81, and adhesive material 82.

Holder body 80 is formed in a plate shape. A plurality of cells 80a are formed in holder body 80. In other words, holder body 80 is a cell assembly. Adsorption material 5 is disposed inside each cell 80a. As a result, adsorption material 5 is disposed in holder body 80 in a dispersed manner. Cell 80a has inner space 80b that accommodates adsorption material 5, inlet port 80c that introduces a gas into inner space 80b, and discharge port 80d that discharges the gas that has passed through inner space 80b. In holder body 80, a plurality of inlet ports 80c are disposed on one surface, and a plurality of discharge ports 80d are disposed on the other surface. As an example, holder body 80 includes a plurality of hexagonal cells 80a in plan view. In adsorption device 4, a flow channel cross-sectional shape of inner space 80b in the flowing direction of the gas from inlet port 80c to discharge port 80d is polygonal (as an example, hexagonal). With this configuration, adsorption device 4 can easily hold the flow channel cross-sectional shape of inner space 80b of holder body 80.

Further, holder body 80 of the present exemplary embodiment includes outer wall portion 80e that surrounds an outer periphery and inner wall portion 80f disposed inside outer wall portion 80e in plan view. Outer wall portion 80e and inner wall portion 80f are erected in a thickness direction of holder body 80. In other words, wall surfaces of outer wall portion 80e and inner wall portion 80f are disposed in a plane including the thickness direction of holder body 80. The plurality of cells 80a are individually partitioned by outer wall portion 80e and inner wall portion 80f. Wall thickness dimensions of outer wall portion 80e and inner wall portion 80f may be the same or different.

In the plurality of cells 80a, inner spaces 80b are independent from each other. Further, adjacent inner spaces 80b are separated from each other. For this reason, holder body 80 can disperse and hold adsorption material 5 in holder body 80 and meanwhile prevent adsorption material 5 from moving between adjacent inner spaces 80b. Further, holder body 80 has strength enough to maintain its shape in a natural state. Therefore, the flow channel of inner space 80b is not blocked by deformation of holder body 80.

The flow channel cross-sectional area of each of the inner spaces 80b in the flowing direction of the gas from inlet port 80c to discharge port 80d of adsorption device 4 can be appropriately set. As an example, the flow channel cross-sectional area of each of the inner spaces 80b is a value in a range from 0.5 cm² to 10.0 cm² inclusive. For example, when the flow channel cross-sectional area is increased in a certain range, a filling amount of adsorption material 5 in each cell 80a is increased, and a gas adsorption/desorption amount of adsorption device 4 is improved. Further, when the flow channel cross-sectional area is reduced in a certain range, heat dissipation to the outside of adsorption material 5 in each cell 80a is reduced, and a heat retaining effect of adsorption material 5 is improved. Further, heat from the outside is favorably transferred to adsorption material 5 via holder body 80. For this reason, in adsorption device 4, by appropriately setting the flow channel cross-sectional area of each of inner spaces 80b, when adsorption material 5 is regenerated by heating, an adsorption object is easily released from adsorption material 5, and time required for regenerating adsorption material 5 can be shortened. Further, adsorption device 4 can enhance the heat retaining effect of adsorption material 5 and a heat conduction effect from holder body 80 to adsorption material 5, and can easily heat adsorption material 5.

In adsorption device 4 of the present exemplary embodiment, as an example, the pressure loss when air is caused to pass through covering material 81 at a flow velocity of 1 m/sec is a value in a range from 5 Pa to 30 Pa inclusive. Further, in adsorption device 4, the pressure loss when the air is caused to pass from the side of inlet port 80c to the side of discharge port 80d at a flow velocity of 1 m/sec is a value in a range from 40 Pa to 500 Pa inclusive. Further, in another example, the pressure loss when the air is caused to pass from the side of inlet port 80c to the side of discharge port 80d at a flow velocity of 1 m/sec is a value in a range from 150 Pa to 500 Pa inclusive.

The material of holder body 80 includes at least one of paper and resin. Paper and resin are examples of materials with a relatively low thermal conductivity. The material of holder body 80 of the present exemplary embodiment includes paper. As described above, since holder body 80 is configured to include paper, the heat retaining effect of adsorption material 5 held by holder body 80 can be enhanced. Note that, the material of holder body 80 of the present exemplary embodiment includes paper, but may include resin instead of paper, or may include paper and resin.

Covering material 81 has air permeability and covers inlet port 80c and discharge port 80d of cell 80a. A peripheral portion of inlet port 80c of each cell 80a and the peripheral portion of discharge port 80d of each cell 80a are adhered to covering material 81. As a result, adsorption material 5 accommodated in inner space 80b of each cell 80a is not mixed through inlet port 80c or discharge port 80d. Further, a state where adsorption material 5 is dispersed over an entire plate surface of holder body 80 is maintained. Further, adsorption material 5 is held in each inner space 80b surrounded by each cell 80a and covering material 81. Therefore, a binder or the like for holding adsorption material 5 in inner space 80b of each cell 80a is unnecessary. Therefore, adsorption performance is not deteriorated by the surface of adsorption material 5 being covered with the binder or the like (for example, in a case where adsorption material 5 is formed in a porous shape, pores on the surface of adsorption material 5 are filled with a binder or the like).

Covering material 81 of the present exemplary embodiment includes a nonwoven fabric. As an example, the nonwoven fabric includes at least one of polypropylene (PP), polyethylene (PE), and polyethylene terephthalate (PET). The basis weight of covering material 81 can be set as appropriate, and is, as an example, a value in a range from 10 g/m² to 90 g/m² inclusive. As a result, the pressure loss of the gas passing through adsorption device 4 is suppressed and meanwhile prevent adsorption material 5 from falling off from covering material 81. As a specific example, adsorption device 4 includes a pair of covering materials 81 disposed on both surfaces of holder body 80.

The pair of covering materials 81 is welded to each other at respective peripheral edges in a state where holder body 80 is covered from both sides. As the welding, in a case where covering material 81 contains a resin material or the like, thermal welding can be adopted. The pair of covering materials 81 are integrated by dissolving and solidifying each other at contact portions with each other. For this reason, an adhesive material for bonding the pair of covering materials 81 is unnecessary. By using a nonwoven fabric for covering material 81, for example, covering material 81 can be configured to be relatively thin and lightweight as compared with a case where a woven fabric is used for covering material 81.

Adhesive material 82 is disposed between covering material 81 and holder body 80, and bonds covering material 81 and holder body 80 together. In other words, covering material 81 and holder body 80 are bonded by adhesive material 82. For this reason, as long as covering material 81 and holder body 80 can adhere to adhesive material 82, the materials of covering material 81 and holder body 80 may be different from each other. Adhesive material 82 is disposed on both surfaces of holder body 80. Adhesive material 82 includes at least one of a thermoplastic resin-based material and an elastomer-based material. Examples of the thermoplastic resin-based material include a vinyl acetate resin-based material, an ethylene vinyl acetate resin (EVA) -based material, a urethane resin-based material, and an acrylic material. Further, examples of the elastomer-based material include a silicone resin-based material, a modified silicone resin-based material, a silylated urethane resin-based material, and a rubber material.

Here, adsorption material 5 is a powder having an average particle diameter in a range from 400 µm to 1.3 mm inclusive. Covering material 81 has an aperture through which the powder does not pass. As a result, it is possible to satisfactorily prevent adsorption material 5 from falling off from covering material 81. Here, the average particle diameter can be measured by the Coulter counter method, a laser diffraction method, an image analysis method, or the like. For example, according to the Coulter counter method, the average particle diameter is calculated as 50% volume average particle diameter. As shown in Fig. 1, adsorption device 4 of the present exemplary embodiment is disposed inside indoor unit 10 so as to correspond to an outer surface of heat exchanger 2, as an example. Note that, in order to dispose adsorption device 4 in a predetermined space, the shape of adsorption device 4 may be processed.

Fig. 3 is a view illustrating a structure of polymer compound 7 contained as a carbon dioxide adsorption material in adsorption material 5 of Fig. 1. In Fig. 3, the structure of polymer compound 7 is schematically illustrated including a partial chemical structure. As shown in Fig. 3, adsorption material 5 contains polymer compound 7 having a chemical structure in which functional group 7b containing an amine group that is at least a primary amine group is bonded. Specifically, polymer compound 7 has base material 7a that forms a molecular skeleton and functional group 7b that is chemically bonded to base material 7a and contains an amine group. The amine group is preferably a primary amine group, for example, but may be a secondary amine group. Functional group 7b of the present exemplary embodiment contains a CH₂-NH₂ group as an example. In the present exemplary embodiment, functional group 7b is bonded as a side chain to a main chain of base material 7a. Base material 7a includes a resin skeleton composed of one or more resins. Base material 7a of the present exemplary embodiment includes at least a polystyrene (PS) -based resin skeleton as the resin skeleton. As described above, since adsorption material 5 is formed in a porous shape, functional group 7b is also present in the pores thereof. As a result, adsorption material 5 also adsorbs carbon dioxide in the pores. As described above, adsorption material 5 contains polymer compound 7 having functional group 7b that adsorbs and releases a predetermined component and a resin skeleton directly or indirectly bonded to functional group 7b.

Here, as a result of an examination by the inventors of the present application, it was confirmed that a porous carbon dioxide adsorption material containing a polymer compound having a chemical structure in which a functional group including an amine group that is at least a primary amine group is bonded can adsorb carbon dioxide contained in a gas abundantly. Further, it was confirmed that this carbon dioxide adsorption material is capable of releasing carbon dioxide adsorbed by the polymer compound at a relatively low temperature. Polymer compound 7 described above is based on such findings.

Polymer compound 7 of the present exemplary embodiment has a structure in which an amine group is bonded to base material 7a that forms a molecular skeleton via a hydrophobic group (as an example, an aromatic ring) having higher hydrophobicity than the amine group. Therefore, adsorption material 5 can be regenerated at a relatively low temperature by an action of this hydrophobic group. Further, adsorption material 5 is kept solid within a driving temperature range of air conditioning device 1. Therefore, even when adsorption material 5 is heated during regeneration, decomposition and volatilization of the amine group are prevented. Further, since adsorption material 5 is kept solid within the driving temperature range of air conditioning device 1, for example, a binder for bonding and holding polymer compound 7 is unnecessary. As a result, it is possible to avoid that the pores of adsorption material 5 are blocked by the binder and the adsorption performance of adsorption material 5 is deteriorated.

As an example, air conditioning device 1 is driven in one of a first mode for reducing a concentration of carbon dioxide in the indoor air and a second mode for increasing the concentration of carbon dioxide in the indoor air. During driving in the first mode, in indoor unit 10, the indoor air is blown toward adsorption material 5 by air blowing mechanism 3. As a result, adsorption material 5 adsorbs carbon dioxide contained in the air. Here, when there is a person in a room, the concentration of carbon dioxide in the indoor air may increase to, for example, 1600 ppm or more. According to the present exemplary embodiment, adsorption material 5 adsorbs carbon dioxide in the room, so that the concentration of carbon dioxide in the room thus increased can be reduced to, for example, 1000 ppm or less. Further, during the driving in the second mode, adsorption material 5 is regenerated by regeneration mechanism 6 and releases carbon dioxide. As a result, the concentration of carbon dioxide in the room increases.

As described above, adsorption device 4 uses adsorption material 5 that repeatedly adsorbs and releases a predetermined component of the gas. By dividing and accommodating adsorption material 5 in inner spaces 80b of the plurality of cells 80a, adsorption device 4 can distribute and disperse adsorption material 5 in each cell 80a. In the present exemplary embodiment, since holder body 80 is formed in a plate shape, adsorption material 5 can be easily held uniformly in a surface of adsorption device 4. As a result, adsorption device 4 can expand the contact area of adsorption material 5 to the gas and increase the adsorption amount of adsorption material 5. Therefore, adsorption device 4 can obtain good adsorption performance. Further, adsorption material 5 repeatedly adsorbs and releases a predetermined component of the gas. For this reason, adsorption device 4 can be continuously used by regenerating adsorption material 5. Therefore, adsorption device 4 can reduce the number of times of replacement, the workload and cost associated with the replacement.

Further, in adsorption device 4 of the present exemplary embodiment, the flow channel cross-sectional area of each of inner spaces 80b in the flowing direction of the gas from inlet port 80c to discharge port 80d is a value in a range from 0.5 cm² to 10.0 cm² inclusive. As a result, adsorption material 5 held in each cell 80a can be efficiently brought into contact with the gas. Therefore, in adsorption device 4, the adsorption amount of adsorption material 5 can be improved. Further, for example, in a case where adsorption material 5 is regenerated by heating, adsorption material 5 held in cell 80a can be efficiently brought into contact with the heated gas. Therefore, in adsorption device 4, adsorption material 5 can be efficiently regenerated.

Further, the material of holder body 80 includes at least one of paper and resin. As a result, the weight of adsorption device 4 can be reduced, and the manufacturing cost can be reduced. Further, adsorption device 4 can easily process holder body 80 into a desired shape. Further, since the material of holder body 80 includes at least one of paper or resin, holder body 80 can be made of a material having a low thermal conductivity. As a result, in adsorption device 4, when adsorption material 5 is heated, adsorption material 5 can be kept warm by holder body 80. Therefore, for example, in a case where adsorption material 5 releases a predetermined component by heating, adsorption device 4 can easily release the adsorption object from adsorption material 5 by keeping adsorption material 5 warm, and can efficiently regenerate adsorption material 5. Such an effect is particularly effective, for example, in a case where the temperature is lowered when adsorption material 5 generates a desorption reaction that releases a predetermined component.

Further, adsorption material 5 contains polymer compound 7 having functional group 7b that adsorbs and releases a predetermined component and a resin skeleton directly or indirectly bonded to functional group 7b. As a result, it is possible to prevent adsorption material 5 from volatilizing and disappearing. Therefore, adsorption device 4 can satisfactorily maintain the adsorption performance of adsorption material 5 and meanwhile regenerate adsorption material 5.

Further, in adsorption device 4 of the present exemplary embodiment, the pressure loss when the air is caused to pass through covering material 81 at a flow velocity of 1 m/sec is a value in a range from 5 Pa to 30 Pa inclusive. As a result, in adsorption device 4, adsorption material 5 held in each cell 80a can be prevented from falling off from holder body 80 by covering material 81, good air permeability can be secured, and adsorption material 5 can be efficiently brought into contact with the gas.

Further, as an example, covering material 81 includes a nonwoven fabric. This nonwoven fabric contains at least one of PP, PE, and PET. As a result, in adsorption device 4, the degree of freedom in designing covering material 81 can be improved. Further, in a case where the nonwoven fabric contains at least one of PP, PE, and PET as described above, the nonwoven fabric and holder body 80 can be relatively easily joined to each other by thermal welding or the like without using an adhesive material. As a result, adsorption device 4 can be simplified in structure and can be reduced in weight.

Further, as an example, the basis weight of covering material 81 is a value in a range from 10 g/m² to 90 g/m² inclusive. As a result, in adsorption device 4, it is possible to efficiently bring adsorption material 5 into contact with the gas and meanwhile prevent adsorption material 5 held in each cell 80a from falling off from holder body 80 by covering material 81.

Further, in adsorption device 4, as an example, the pressure loss when the air is caused to pass from the side of inlet port 80c to the side of discharge port 80d at a flow velocity of 1 m/sec is a value in a range from 40 Pa to 500 Pa inclusive. As a result, in adsorption device 4, the air permeability of each cell 80a can be further improved.

Further, adsorption device 4 includes adhesive material 82 that bonds covering material 81 and holder body 80, and adhesive material 82 includes at least one of a thermoplastic resin-based material and an elastomer-based material. As a result, in adsorption device 4, covering material 81 can be more firmly attached to holder body 80 by adhesive material 82, and adsorption material 5 can be further prevented from falling off from holder body 80. Therefore, adsorption device 4 can maintain the good durability. Note that, in a case where the concentration of carbon dioxide in the room continues to be maintained at a low concentration by air conditioning device 1, the carbon dioxide generated during the regeneration of adsorption material 5 may be discharged to the outside of the room. Further, the pair of covering materials 81 may not be welded to each other, and may be bonded by an adhesive material, for example. In this case, for example, options of the material of covering material 81 can be expanded.

### (Modifications)

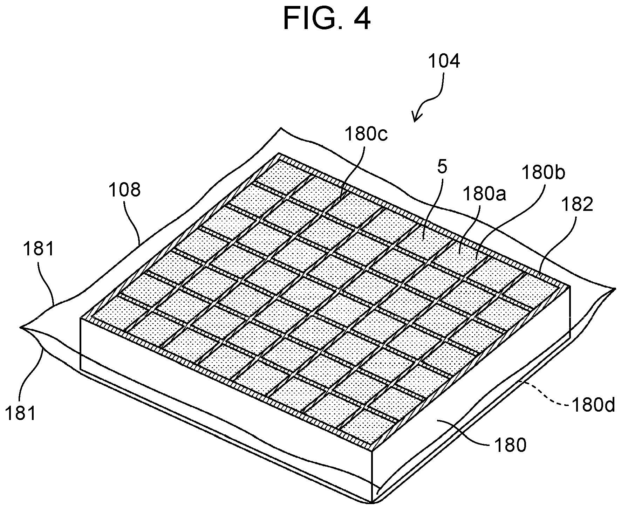

Next, a modification of the present exemplary embodiment will be described. Fig. 4 is a schematic view illustrating a configuration of adsorption device 104 according to the first modification. Adsorption device 104 includes adsorption material 5 and holder 108. Holder 108 includes holder body 180, covering material 181, and adhesive material 182. Holder body 180 includes a plurality of cells 180a having a rectangular shape in plan view. In adsorption device 104, the flow channel cross-sectional shape of inner space 180b in the flowing direction of the gas from inlet port 180c to discharge port 180d is rectangular. Holder 108 is formed by processing so as to cut out a portion corresponding to inner space 180b by using, for example, a plate material. Such adsorption device 104 can also obtain the same effect as adsorption device 4.

The flow channel cross-sectional shape of inner space 180b is rectangular in the first modification, but may be at least one of a circle and a polygon including a rectangle such as a rectangle. Further, the flow path cross-sectional shape of inner space 180b may have an irregular shape. In other words, holder body 180 may be provided with a plurality of cells 180a including inner spaces 180b having different shapes or flow channel cross-sectional shapes having different cross-sectional areas.

In adsorption device 4 according to a second modification, covering material 81 includes a metal mesh. The material of the metal mesh is, for example, stainless steel such as SUS 304. As a result, in adsorption device 4 according to the second modification, the durability of covering material 81 can be improved. Further, in adsorption device 4 according to the second modification, the thermal conductivity of the covering material 81 can be improved. Therefore, in adsorption device 4 according to the second modification, for example, in a case where adsorption material 5 is regenerated by heating, adsorption material 5 can be easily regenerated by heating adsorption material 5 from the outside of adsorption device 4 through covering material 81.

Further, adsorption material 5 of the present modification is a powder having an average particle diameter in a range from 400 µm to 1.3 mm inclusive. On the other hand, covering material 81 includes a mesh having a mesh diameter in a range from 50 (mesh/inch) to 200 (mesh/inch) inclusive. Another example of the mesh diameter is a value in a range from 65 (mesh/inch) to 200 (mesh/inch) inclusive. As a result, in adsorption device 4 according to the present modification, it is possible to prevent adsorption material 5 from falling off through the gap of covering material 81 and meanwhile satisfactorily secure the specific surface area of adsorption material 5.

In adsorption device 4 according to the third modification, the material of holder body 80 includes at least one of metal and ceramic. Examples of the metal include, but are not limited to, those excellent in thermal conductivity (for example, aluminum, copper, an alloy containing at least one of these, and the like). Holder body 80 according to the present modification has a thermal conductivity in a range from 50 W/mK to 500 W/mK inclusive.

According to the present modification, since the material of holder body 80 includes at least one of metal and ceramic, holder body 80 can be made of a material having a relatively high thermal conductivity. As a result, adsorption device 4 according to the third modification can heat adsorption material 5 through holder body 80 when heating adsorption material 5. Therefore, for example, in a case where adsorption material 5 releases a predetermined component by heating, adsorption device 4 according to the third modification favorably heats adsorption material 5 to easily release the adsorption object from adsorption material 5, and can efficiently regenerate adsorption material 5. As in the exemplary embodiment, such an effect is particularly effective, for example, in a case where the temperature is lowered when adsorption material 5 generates a desorption reaction that releases a predetermined component.

In adsorption device 4 according to the fourth modification, adhesive material 82 is omitted, and a pair of covering materials 81 is bonded to holder body 80 by thermal welding. The material of holder body 80 includes paper. Since adhesive material 82 is omitted, adsorption device 4 according to the present modification can be reduced in weight. Further, adsorption device 4 according to the present modification can improve manufacturing efficiency.

The present disclosure is not limited to the above exemplary embodiment and the above modifications, and the configuration can be changed, added, or deleted without departing from the gist of the present disclosure. Applications of the air conditioning device are not limited to indoor applications, and may be other applications such as factory exhaust gas treatment applications, agricultural facility applications, and in-vehicle applications. Further, the application device including the adsorption device according to the present disclosure is not limited to the air conditioning device. Further, the adsorption object of the adsorption material according to the present disclosure is not limited to carbon dioxide, and may be water or other components contained in a gas. Further, in a case where the adsorption device according to the present disclosure is applied to an air conditioning device for a dehumidification application, the air conditioning device may be a desiccant type.

In a case where the adsorption material according to the present disclosure can be repeatedly regenerated, the adsorption material according to the present disclosure may be regenerated by a method other than heating. The adsorption material according to the present disclosure may not be a powder as long as it is formed in a shape capable of being accommodated in the inner space according to the present disclosure of each cell according to the present disclosure. Further, in a case where the adsorption material according to the present disclosure is a powder, the shape and size of particles may not be the same. Further, the covering material according to the present disclosure is not limited to one including a nonwoven fabric, and may include, for example, a woven fabric. The shape of the holder body according to the present disclosure is not limited to the plate shape, and may be another shape such as a rectangular parallelepiped shape or a cylindrical shape.

### REFERENCE MARKS IN THE DRAWINGS

1: air conditioning device
2: heat exchanger
3: air blowing mechanism
4: adsorption device
5: adsorption material
6: regeneration mechanism
7: polymer compound
7a: base material
7b: functional group
8: holder
10: indoor unit
80: holder body
80a: cell
80b: inner space
80c: inlet port
80d: discharge port
80e: outer wall portion
80f. inner wall portion
81: covering material
82: adhesive material
104: adsorption device
108: holder
180: holder body
180a: cell
180b: inner space
180c: inlet port
180d: discharge port
181: covering material
182: adhesive material

## Claims

1. An adsorption device comprising:
an adsorption material that repeatedly adsorbs and releases a predetermined component of a gas; and
a holder that holds the adsorption material in contact with the gas, wherein
the holder includes:
a holder body that includes a plurality of cells, each of the plurality of cells including an inner space that accommodates the adsorption material, an inlet port through which the gas is introduced into the inner space, and a discharge port through which the gas that has passed through the inner space is discharged; and
a covering member having air permeability and covering the inlet port and the discharge port of the each of the plurality of cells.

2. The adsorption device according to Claim 1, wherein for each of the plurality of cells, a flow channel cross-sectional area of the inner space in a flowing direction of the gas from the inlet port to the discharge port is a value in a range from 0.5 cm² to 10.0 cm² inclusive.

3. The adsorption device according to Claim 1 or 2, wherein a material of the holder body includes at least one of paper and resin.

4. The adsorption device according to Claim 1 or 2, wherein a material of the holder body includes at least one of metal and ceramic.

5. The adsorption device according to Claim 4, wherein a thermal conductivity of the holder body is a value in a range from 50 W/mK to 500 W/mK inclusive.

6. The adsorption device according to any one of Claims 1 to 5, wherein the adsorption material contains a polymer compound having a functional group that adsorbs and releases the predetermined component and a resin skeleton directly or indirectly bonded to the functional group.

7. The adsorption device according to any one of Claims 1 to 6, wherein a pressure loss when air is caused to pass through the covering material at a flow velocity of 1 m/sec is a value in a range from 5 Pa to 30 Pa inclusive.

8. The adsorption device of any one of Claims 1 to 7, wherein the covering material includes a nonwoven fabric.

9. The adsorption device according to Claim 8, wherein the nonwoven fabric contains at least one of polypropylene (PP), polyethylene (PE), and polyethylene terephthalate (PET).

10. The adsorption device according to any one of Claims 1 to 9, wherein a basis weight of the covering material is a value in a range from 10 g/m² to 90 g/m² inclusive.

11. The adsorption device of any one of Claims 1 to 7, wherein the covering material includes a metal mesh.

12. The adsorption device according to any one of Claims 1 to 11, wherein a pressure loss when air is caused to pass from a side of the inlet port to a side of the discharge port at a flow velocity of 1 m/sec is a value in a range from 40 Pa to 500 Pa inclusive.

13. The adsorption device according to any one of Claims 1 to 12, wherein the adsorption material is a powder having an average particle diameter in a range from 400 µm to 1.3 mm inclusive.

14. The adsorption device according to Claim 13, wherein the covering material includes a mesh having a mesh diameter in a range from 50 (mesh/inch) to 200 (mesh/inch) inclusive.
